# EUROPEAN PATENT APPLICATION

(11) **EP 2 848 780 A1**
(43) Date of publication of application: **18.03.2015**
(21) Application number: 13787477.2
(22) Date of filing: 30.04.2013
(51) Int. Cl.: F01M 11/03, B01D 29/07, B01D 35/02, B01J 20/04, B01J 20/06, B01J 20/08, B01J 20/10, C10M 175/02

(54) **OIL DEGRADATION PREVENTION DEVICE**

(30) Priority: 07.05.2012 JP 2012106261
(71) Applicant: Toyota Boshoku Kabushiki Kaisha, Kariya-shi, Aichi 448-8651 (JP); TOYOTA JIDOSHA KABUSHIKI KAISHA, Toyota-shi, Aichi-ken, 471-8571 (JP); Kabushiki Kaisha Toyota Chuo Kenkyusho, Nagakute-shi, Aichi 480-1192 (JP)
(72) Inventor: MORISHITA, Hideto, Kariya-shi Aichi 448-8651 (JP); SAITO, Yasuhiro, Kariya-shi Aichi 448-8651 (JP); FUKUTOMI, Ippei, Toyota-shi, Aichi-ken, 471-8571 (JP); MURAKAMI, Motoichi, Toyota-shi, Aichi-ken, 471-8571 (JP); MIYASAKA, Katsuichi, Toyota-shi, Aichi-ken, 471-8571 (JP); OHMIYA, Yasuhiro, Nagakute-shi Aichi 480-1192 (JP); MORITANI, Hiroshi, Nagakute-shi Aichi 480-1192 (JP); TOHYAMA, Mamoru, Nagakute-shi Aichi 480-1192 (JP); TATSUDA, Narihito, Nagakute-shi Aichi 480-1192 (JP)
(74) Representative: TBK
(86) International application number: PCT/JP2013/062663
(87) International publication number: WO 2013/168648

(57) **Abstract**

Provided is an oil deterioration prevention device with which the trapping effect with respect to oil deteriorated components can be improved and with which the oil passage resistance can be reduced, thereby suppressing a rise in pressure loss. This oil deterioration prevention device (1) is equipped with: a filter unit (3) equipped with a filter material (10) that filters oil; and a deterioration prevention unit (4) equipped with a powdery deterioration suppressing agent (17) that suppresses oil deterioration. The deterioration prevention unit contains a mesoporous inorganic material, and of the oil fed from an oil storage unit (9), the oil filtered by the filter unit is fed to parts which are to be lubricated, and the oil in which deterioration has been suppressed by the deterioration prevention unit is returned to the oil storage unit or is fed to the parts to be lubricated.

## Description

### [FIELD OF THE INVENTION]

The present invention relates to an oil deterioration prevention device. Specifically, the invention relates to an oil deterioration prevention device with an improved trapping effect on deterioration products of oil and with reduced oil flow resistance to prevent an increase in pressure loss.

### [BACKGROUND ART]

A known conventional filter element is made from fibers, and fine particles (for example, hydrotalcite and the like) for removing carbon, acid, deterioration products and the like produced in the internal combustion engine (see, for example, Patent Literature 1). In an oil filter that uses this filter element, for example, as shown in FIG. 9, a housing 202 that accommodates the filter element 210 is formed with oil inlet passages 205 for allowing oil sent from an oil pan to flow into the housing 202. Also formed is an oil outlet passage 206 for allowing oil filtered by the filter element 210 to flow to lubrication target units of the engine (for example, crankshaft, cylinder wall, valve operating mechanism, and the like). As oil flowing into the housing 202 from the oil inlet passages 205 is filtered by the filter element 210, carbon is removed by the fine particles 217, after which the oil flows out from the oil outlet passage 206 to the lubrication target units of the engine.

Another known filter uses a filter element obtained by molding an adhesive, processed fiber material and a filter element material containing sepiolite while applying heat (see, for example, Patent Literature 2). With the use of sepiolite, this filter can provide an excellent trapping effect on oil impurities, too. Therefore, it is suitable for lubricating car engines, in particular.

### [PRIOR ART LITERATURE]

### [PATENT LITERATURE]

Patent Literature 1: JP A H03-296408
Patent Literature 2: JP A 2001-38119

### [SUMMARY OF THE INVENTION]

### [PROBLEMS THAT THE INVENTION IS TO SOLVE]

However, the conventional oil filter described in Patent Literature 1 employs a form in which all oil sent from the oil pan passes through the filter element (so-called full flow style). There is thus the problem of high pressure loss due to the resistance of fine particles such as hydrotalcite and the like that form the filter element. The filter described in Patent Literature 2 has only been evaluated with respect to the trapping effect by using a test oil that contains a specific test dust including carbon black, ferric oxide, and the like. The document does not discuss anything regarding the trapping of other components produced by deterioration. Another problem is that sepiolite has little trapping effect on nitric ester, which is one kind of deterioration products of engine oil.

The invention was conceived in view of the above situation. An object of the present invention is to provide an oil deterioration prevention device with an improved trapping effect on deterioration products of oil and with reduced oil flow resistance to prevent an increase in pressure loss.

### [MEANS FOR SOLVING PROBLEMS]

Initial deterioration products of oil polymerize to form a sludge. Therefore, initial deterioration products such as nitric ester and the like are adsorbed on the surface of pores of a mesoporous inorganic material held in a deterioration prevention unit installed inside the oil filter, before they form the sludge. Sludge formation is thus prevented, so that oil deterioration is suppressed. In the oil filter, also, the installation position of the deterioration prevention unit that holds a mesoporous inorganic material, which may be a resistance to oil flow, is suitably located relative to the oil flow inside the filter. Thereby, a structure that prevents an increase in pressure loss can be achieved.

The present invention was made based on such findings.

The invention as described in claim 1 in order to solve the above problem is characterized by including a filter unit having a filter element for filtering an oil, and a deterioration prevention unit having a powdery deterioration suppressing agent that prevents an oil from deteriorating, wherein the deterioration suppressing agent has a mesoporous inorganic material, and wherein part of oil sent from an oil storage unit is delivered to a lubrication target unit after being filtered in the filter unit, and an oil that is restrained in deterioration by the deterioration prevention unit is either returned to the oil storage unit or delivered to the lubrication target unit.

The invention as described in claim 2 is an invention according to claim 1 wherein an average pore diameter of the mesoporous inorganic material is in a range from 1 to 30 nm.

The invention as described in claim 3 is an invention according to claim 1 wherein a pore volume of the mesoporous inorganic material is in a range from 0.3 to 4.0 cm³/g.

The invention as described in claim 4 is an invention according to claim 1 wherein a specific surface area of the mesoporous inorganic material is in a range from 120 to 2,000 m²/g.

The invention as described in claim 5 is an invention according to any one of claims 1 to 4 wherein the mesoporous inorganic material is an oxide-based inorganic material including an element selected from the group consisting of Si, Al, Fe, Ca, and Mg.

The invention as described in claim 6 is an invention according to any one of claims 1 to 5 wherein the deterioration prevention unit has a porous layer that holds the deterioration suppressing agent and allows oil to pass through.

The invention as described in claim 7 is an invention according to claim 6 wherein the porous layer has a first porous layer and a second porous layer stacked upon one another in a direction in which oil flows, the first porous layer on an upstream side having a larger porosity than the second porous layer on a downstream side.

The invention as described in claim 8 is an invention according to claim 6 or 7 wherein the deterioration prevention unit has an intermediate layer that is disposed between a plurality of the porous layers, the intermediate layer not allowing the deterioration suppressing agent to pass through but allowing oil to pass through.

The invention as described in claim 9 is an invention according to any one of claims 1 to 8 wherein the oil deterioration prevention device has further a housing that accommodates the filter unit and the deterioration prevention unit, wherein the housing is formed with an oil inlet passage for allowing oil sent from the oil storage unit to flow into the housing, an oil outlet passage for allowing oil filtered in the filter unit to flow out to the lubrication target unit, and an oil return passage for returning the oil that is restrained in deterioration by the deterioration prevention unit to the oil storage unit.

### [EFFECT OF THE INVENTION]

According to the oil deterioration prevention device of the present invention, part of oil sent from an oil storage unit is delivered to lubrication target units after being filtered in the filter unit. On the other hand, oil that is restrained in deterioration by the deterioration prevention unit that holds a deterioration suppressing agent containing a mesoporous inorganic material is either returned to the oil storage unit or delivered to the lubrication target units. Therefore, part of oil sent from the oil storage unit flows through a bypass passage, so that oil flow resistance is reduced and an increase in pressure loss is prevented.

In the case where the mesoporous inorganic material has an average pore diameter of 1 to 30 nm, it can allow initial deterioration products to readily enter the pores to be fully adsorbed therein, so that sludge formation is prevented reliably and oil deterioration is suppressed.

In the case where the pore volume is in a range from 0.3 to 4.0 cm³/g, there will be sufficient pore space for adsorbing initial deterioration products, so that initial deterioration products are readily adsorbed, and sludge formation is prevented reliably and oil deterioration is suppressed.

In the case where the mesoporous inorganic material has a specific surface area of 120 to 2,000 m²/g, it has a sufficient surface area for adsorbing initial deterioration products, so that initial deterioration products are readily adsorbed, and sludge formation is prevented reliably and oil deterioration is suppressed.

In the case where the mesoporous inorganic material is an oxide-based inorganic material containing an element selected from the group consisting of Si, Al, Fe, Ca, and Mg, it can fully function as a deterioration suppressing agent, so that initial deterioration products will be adsorbed on the pore surface, and sludge formation is prevented reliably and oil deterioration is suppressed sufficiently.

In the case where the deterioration prevention unit includes a porous layer, the deterioration suppressing agent can be held in the porous layer in an appropriately scattered state. Therefore, the oil flow resistance can be reduced further, so that the deterioration prevention unit can have an even higher effect of oil deterioration prevention.

In the case where the porous layer has a first porous layer and a second porous layer, and the first porous layer on an upstream side has a larger porosity than that of the second porous layer on a downstream side, more deterioration suppressing agent can be held in the second porous layer than in the first porous layer. Therefore, oil will spread gradually as it flows from the first porous layer to the second porous layer. Therefore, the oil flow resistance can be reduced further, so that the deterioration prevention unit can have an even higher effect of oil deterioration prevention.

In the case where the deterioration prevention unit includes an intermediate layer, it will stop the deterioration suppressing agent from moving between a plurality of porous layers. Therefore, the deterioration suppressing agent is prevented from clumping together in the porous layer on the downstream side. Therefore, the oil flow resistance can be reduced further, so that the deterioration prevention unit can have an even higher effect of oil deterioration prevention.

In the case where there is provided a housing that accommodates the filter unit and the deterioration prevention unit, and the housing has an oil inlet passage, an oil outlet passage, and an oil return passage, oil sent from the oil storage unit will flow into the housing through the oil inlet passage, while the oil filtered in the filter unit will flow out from the oil outlet passage to lubrication target units. On the other hand, oil that is restrained in deterioration by the deterioration prevention unit will be returned via the oil return passage to the oil storage unit. Therefore, the oil deterioration prevention device, filter unit, and deterioration prevention unit can be readily replaced.

### [BRIEF DESCRIPTION OF THE DRAWINGS]

The present invention is further described in the detailed description which follows, in reference to the noted plurality of drawings by way of non-limiting examples of exemplary embodiments of the present invention, in which like reference numerals represent similar parts throughout the several views of the drawings, and wherein:
FIG. 1 is a longitudinal cross-sectional view of an oil deterioration prevention device according to Example 1;
FIG. 2 is an enlarged view of a cross section across the line II-II in FIG. 1;
FIG. 3 is a diagram for explaining the function of the oil deterioration prevention device;
FIG. 4 is a diagram for explaining the function of the oil deterioration prevention device;
FIG. 5 is a longitudinal cross-sectional view of an oil deterioration prevention device according to Example 2;
FIG. 6 is a diagram for explaining the function of the oil deterioration prevention device;
FIG. 7A and FIG. 7B are longitudinal cross-sectional views of an essential part of the deterioration prevention unit in another embodiment, FIG. 7A showing an embodiment in which each of a plurality of porous layers is a single layer, and FIG. 7B showing an embodiment in which a single porous layer and multi porous layers are combined;
FIG. 8A and FIG. 8B are longitudinal cross-sectional views of an essential part of the deterioration prevention unit in another embodiment, FIG. 8A showing an embodiment in which a single porous layer is provided, and FIG. 8B showing an embodiment in which deterioration suppressing agent is sealed without providing a porous layer;
FIG. 9 is a longitudinal cross-sectional view of a conventional oil deterioration prevention device;
FIG. 10 is a schematic diagram of a filter device used for evaluating the deterioration product trapping effect according to Test Example 1;
FIG. 11 is an infrared spectroscopy chart of nitric ester, which is an initial deterioration product;
FIG. 12 is a graph showing results of nitric ester trapping;
FIG. 13 is a schematic diagram of a device used in a deterioration test of Test Example 2;
FIG. 14 is a graph showing acid number when activated white clay was used and when it was not used in comparison;
FIG. 15 is a graph showing amounts of initial deterioration products in Test Example 3.
FIG. 16 is a graph showing base number in Test Example 3; and
FIG. 17 is a graph showing acid number in Test Example 3.

### [DESCRIPTION OF EMBODIMENTS]

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

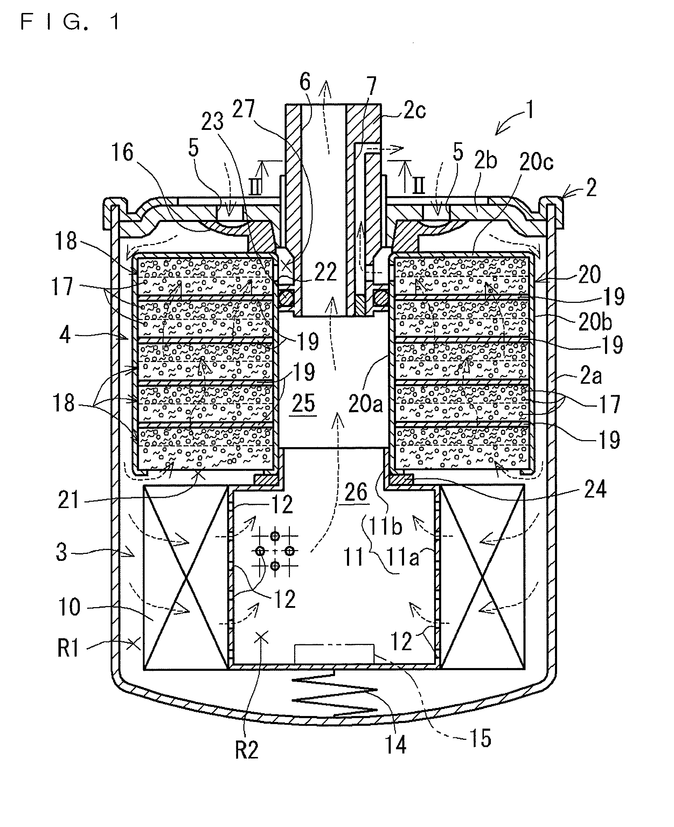

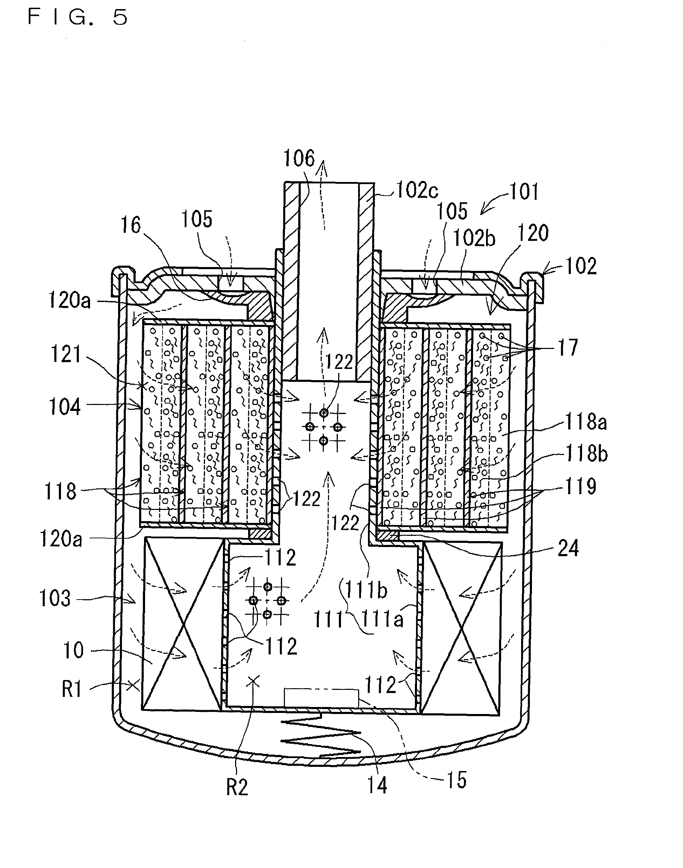

An oil deterioration prevention device (1, 101) according to Embodiment 1 includes a filter unit (3, 103) having a filter element (10) for filtering an oil, and a deterioration prevention unit (4, 104) having a powdery deterioration suppressing agent (17) that prevents the oil from deteriorating. The deterioration suppressing agent contains a mesoporous inorganic material, and part of oil sent from an oil storage unit is delivered to a lubrication target unit after being filtered in the filter unit. Meanwhile, an oil that is restrained in deterioration by the deterioration prevention unit is either returned to the oil storage unit or delivered to the lubrication target unit. The oil deterioration prevention device (1, 101) according to Embodiment 1 is characterized by this configuration (see, for example, FIGs. 1, 5, and others).

The "oil storage unit" may be, for example, an oil pan used in a wet sump engine, an oil tank used in a dry sump engine, an oil pan used in an automatic transmission, and the like. The "lubrication target units" may be, for example, various mechanisms in an engine (such as crankshaft, cylinder wall, valve operating mechanism and the like), various mechanisms in an automatic transmission, or the like. The "filter element" may be of any type and have any shape as long as it can filter oil. Examples of such a filter element may include fibrous bodies such as unwoven cloth, paper, woven or knitted fabric, foamed resin materials such as urethane, and porous resin films.

The "powdery deterioration suppressing agent" may be of any type and have any style of deterioration prevention as long as it contains a mesoporous inorganic material and can prevent oil from deteriorating. Mesoporous inorganic materials are porous inorganic materials. An average pore diameter of the mesopores is generally in a range from 1 to 50 nm, preferably from 1 to 30 nm, and more preferably from 2 to 25 nm. If the mesopores have an average pore diameter of less than 1 nm, the mesopore diameter will be smaller than the size of trapping target materials, and therefore the trapping performance tends to reduce. On the other hand, if the average pore diameter exceeds 30 nm, and in particular 50 nm, the specific surface area will be smaller and the trapping performance tends to reduce. Therefore, the mesoporous inorganic material to be used is preferably selected so that it has an average pore diameter suitable for the size of trapping target materials.

A pore volume of the mesoporous inorganic material is preferably in a range from 0.3 to 4.0 cm³/g, and particularly from 0.4 to 2.0 cm³/g. If the pore volume is less than 0.3 cm³/g, initial deterioration products will not be sufficiently adsorbed and sludge formation tends not to be fully prevented. On the other hand, fabrication of a mesoporous inorganic material having a pore volume of more than 4.0 cm³/g is physically difficult. Even if a mesoporous inorganic material having a pore volume of more than 4.0 cm³/g could be fabricated, the mesoporous structure itself may not be able to retain its strength and shape. If the pore volume is in the range of 0.4 to 2.0 cm³/g, initial deterioration products can be fully adsorbed. Such a mesoporous inorganic material can be fabricated easily and will have sufficient strength and be able to retain its shape.

Preferably, about 60% or more of the entire pore volume of the mesoporous inorganic material is taken up by pores in a range of about ±40% of an average pore diameter of a pore diameter distribution curve. The fact that the mesoporous inorganic material satisfies this condition means that it has high uniformity in pore diameter. Here, "about 60% or more of the entire pore volume of the mesoporous inorganic material is taken up by pores in a range of about ±40% of an average pore diameter of a pore diameter distribution curve" means that, for example, if the average pore diameter is about 3 nm, a total sum of volumes of the mesopores having an average pore diameter of about ±40% of about 3 nm, i.e., in a range of about 1.8 to 4.2 nm, take up about 60% or more of the entire pore volume.

Furthermore, a specific surface area of the mesoporous inorganic material is preferably in a range from 120 to 2,000 m²/g, and more preferably from 400 to 1,200 m²/g. If the specific surface area is less than 120 m²/g, initial deterioration products will not be sufficiently adsorbed and sludge formation tends not to be fully prevented. On the other hand, fabrication of a mesoporous inorganic material having a specific surface area of more than 2,000 m²/g is physically difficult. Even if a mesoporous inorganic material having a specific surface area of more than 2,000 m²/g could be fabricated, the mesoporous structure itself may not be able to retain its strength and shape. If the mesoporous inorganic material has a specific surface area in the range of 400 to 1,200 m²/g, it can sufficiently adsorb initial deterioration products, have sufficient strength, and can retain its shape.

The mesoporous inorganic material is not limited to a particular type and may be any material as long as it has mesopores and can prevent oil from deteriorating, but preferably has the average pore diameter, pore volume, and specific surface area mentioned above. A mesoporous inorganic material having an average pore diameter from 1 to 30 nm and preferably from 2 to 25 nm and having a pore volume from 0.3 to 4.0 cm³/g and preferably from 0.4 to 2.0 cm³/g is more preferable. A mesoporous inorganic material having an average pore diameter from 1 to 30 nm and preferably from 2 to 25 nm and having a specific surface area from 120 to 2,000 m²/g and preferably from 400 to 1,200 m²/g is even more preferable. A mesoporous inorganic material having a pore volume from 0.3 to 4.0 cm³/g and preferably from 0.4 to 2.0 cm³/g and having a specific surface area from 120 to 2,000 m²/g and preferably from 400 to 1,200 m²/g is more preferable. A mesoporous inorganic material having an average pore diameter from 1 to 30 nm and preferably from 2 to 25 nm and having a pore volume from 0.3 to 4.0 cm³/g and preferably from 0.4 to 2.0 cm³/g and having a specific surface area from 120 to 2,000 m²/g and preferably from 400 to 1,200 m²/g is particularly preferable.

The average pore diameter, pore volume, and specific surface area of a mesoporous inorganic material can be measured in the following manner.

A nitrogen adsorption isotherm is determined at 77K by a constant volume process using an automatic gas adsorption measurement apparatus "BELSORP-mini II" (model name) manufactured by BELL JAPAN, INC. A heat treatment is carried out in vacuum at 150°C for two hours as a pretreatment so as to remove the effects of adsorbed water. A pore volume (Vp) is determined from the amount of adsorption at P/P0 (relative pressure) of 0.95 of the absorption isotherm obtained. A pore diameter distribution is determined by a BJH method, and a peak value in this pore diameter distribution is defined as an average pore diameter. A specific surface area is calculated from the amount of adsorption at P/P0 (relative pressure) of 0.05 to 0.20 of the BET plot.

Oxide-based inorganic materials having various elements are a specific example of mesoporous inorganic materials. For example, oxide-based inorganic materials having an element selected from the group consisting of Si, Al, Fe, Ca, and Mg can be used. In addition to the above, oxide-based inorganic materials having an element such as Nb, Ta, Zr, Ti, Zn, and the like may also be used. For the mesoporous inorganic material, an oxide-based inorganic material having Si and/or Al is preferable. Examples of such oxide-based inorganic materials include an amorphous mesoporous silica-based inorganic material called FSM (Folded Sheet Mesoporous Material) that has a honeycomb structure, an activated white clay including Si, Al, and the like, silica gel, activated alumina, and the like. Note that sepiolite is excluded from the mesoporous inorganic materials as defined in the present invention since, even though it has mesopores, it has a small pore volume and exhibits a poor ability of adsorbing nitric ester, which is an initial deterioration product of oil.

The deterioration suppressing agent should at least contain a mesoporous inorganic material. The content of the mesoporous inorganic material is preferably 10% or more by mass based on 100% by mass of a total of the deterioration suppressing agent. Further the content thereof is more preferably 20% or more by mass, and the entire of the deterioration suppressing agent is a mesoporous inorganic material. If the deterioration suppressing agent contains other agents than mesoporous inorganic materials, the agents may be of any kind, including, for example, acidic white clay, diatom earth, zeolite, non-porous silica, hydrotalcite, various ion-exchange resin powders, and the like.

Furthermore, an average particle diameter of the mesoporous inorganic material is nor particularly limited. It is preferably in a range from 0.1 to 200 µm, for example, more preferably from 2.5 to 150 µm, and especially from 10 to 100 µm. This average particle diameter is a particle diameter when an accumulated weight is 50% in a particle size distribution measurement by a laser diffraction method (median diameter).

In one embodiment that can be given as one example of an oil deterioration prevention device according to Embodiment 1, the deterioration prevention unit (4, 104) holds a deterioration suppressing agent (17), and includes a porous layer (18, 118), which oil can pass through (see, for example, FIGs. 1, 5, and others). Examples of the porous layer include a fibrous body such as nonwoven, paper, woven and knitted fabric; a foamed resin material of a urethane; a porous resin film; and the like.

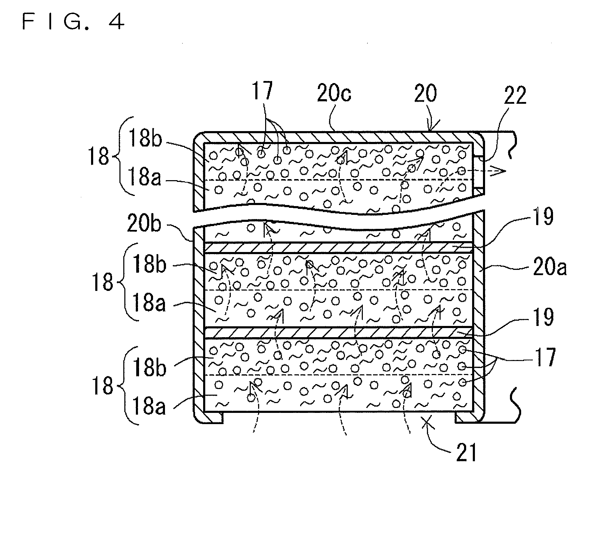

In the embodiment described above, for example, the porous layer (18, 118) includes a first porous layer (18a, 118a) and a second porous layer (18b, 118b) stacked upon one another in a direction in which oil flows. The first porous layer which is on the upstream side may have a larger porosity than that of the second porous layer which is on the downstream side (see, for example, FIG. 4 and others). Here, for example, the first porous layer may have a porosity of 0.7 to 0.99 (preferably 0.9 to 0.99), and the second porous layer may have a porosity of 0.5 to 0.95 (preferably 0.8 to 0.95). The "porosity" mentioned above is usually calculated from the formula {1 - [basis weight of porous layer / (thickness of porous layer × density of material forming the porous layer)]}. The "basis weight" of porous layer means the weight per unit area of the porous layer. Furthermore, deterioration suppressing agents other than the mesoporous inorganic materials in the deterioration suppressing agent may also have an average particle diameter in the same range as the average particle diameter of the mesoporous inorganic materials mentioned above. The average particle diameter here is also a median diameter.

In the embodiment described above, for example, the deterioration prevention unit (4, 104) may include an intermediate layer (19, 119) disposed between the plurality of porous layers (18, 118). While oil can pass through this intermediate layer (19, 119), the deterioration suppressing agent (17) cannot pass through (see, for example FIG. 4 and others). Examples of a material of such an intermediate layer may include fibrous bodies such as unwoven cloth, paper, woven or knitted fabric, foamed resin materials such as urethane, and porous resin films.

One example of the oil deterioration prevention device according to Embodiment 1 is an embodiment [A] having a housing (2) that accommodates a filter unit (3) and a deterioration prevention unit (4) (see, for example, FIG. 1, and others). In this embodiment [A], the housing is formed with an oil inlet passage (5) for allowing oil sent from an oil storage unit (9) to flow into the housing, an oil outlet passage (6) for allowing oil filtered in the filter unit to flow out to lubrication target units, and an oil return passage (7) for returning oil that is restrained in deterioration by the deterioration prevention unit to the oil storage unit. Another example of the oil deterioration prevention device according to Embodiment 1 is an embodiment [B] having a housing (102) that accommodates a filter unit (103) and a deterioration prevention unit (104) (see, for example, FIG. 5 and others). In this embodiment [B], the housing is formed with an oil inlet passage (105) for allowing oil sent from an oil storage unit (9) to flow into the housing, and an oil outlet passage (106) for allowing oil filtered in the filter unit and oil that is restrained in deterioration by the deterioration prevention unit to flow out to lubrication target units.

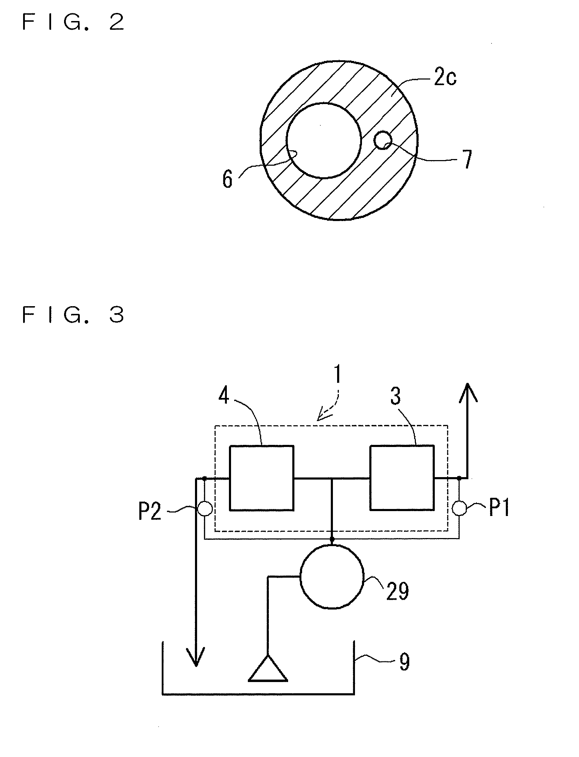

In the embodiment [A] described above, for example, the oil outlet passage (6) may have a larger maximum cross-sectional area (S1) than a maximum cross-sectional area (S2) of the oil return passage (7) (see, for example, FIG. 2 and others). Thereby, a relatively large amount of oil can flow through the oil outlet passage to lubricate the lubrication target units favorably. On the other hand, a relatively small amount of oil flows through the oil return passage so that the oil flow resistance can be reduced further. In this case, the ratio of the maximum cross-sectional areas of both passages (S1/S2) may be 10 to 1,000 (preferably 50 to 200), for example.

In the embodiment [A] described above, for example, the filter unit (3) and the deterioration prevention unit (4) are arranged such as to divide the inner space of the housing (2) into an upstream space (R1) that connects to the oil inlet passage (5) and a downstream space (R2) that connects to the oil outlet passage (6). The deterioration prevention unit (4) further has a container case (20) for containing the deterioration suppressing agent (17). This container case may be formed with an inlet port (21) that opens to the upstream space, and an outlet port (22) that is separated from the upstream space and downstream space and connects to the oil return passage (7) (see, for example, FIG. 1 and others). Thereby, oil sent from the oil storage unit flows into the upstream space inside the housing through the oil inlet passage. Also, oil that has been filtered in the filter unit flows out from the downstream space and oil outlet passage to the lubrication target units. Meanwhile, oil that flows into the container case from the inlet port flows through the deterioration suppressing agent to prevent deterioration before being returned to the oil storage unit via the outlet port and oil return passage.

In the embodiment [B] described above, for example, the filter unit (103) and the deterioration prevention unit (104) are arranged such as to divide the inner space of the housing (102) into an upstream space (R1) that connects to the oil inlet passage (105) and a downstream space (R2) that connects to the oil outlet passage (106). The deterioration prevention unit (104) further has a container (120) for containing the deterioration suppressing agent (17). This container may be formed with an inlet port (121) that opens to the upstream space, and an outlet port (122) that opens to the downstream space (see, for example, FIG. 5 and others). Thereby, oil sent from the oil storage unit flows into the upstream space inside the housing through the oil inlet passage. Also, oil that has been filtered in the filter unit flows out from the downstream space and oil outlet passage to the lubrication target units. Meanwhile, oil that flows into the container from the inlet port flows through the deterioration suppressing agent to prevent deterioration before flowing out to the lubrication target units via the outlet port, downstream space, and oil return passage.

In the embodiment [A] described above, for example, the filter unit (3) and the deterioration prevention unit (4) that are tubular are disposed along the axial direction inside the housing (2). The container case (20) has tubular inner wall (20a) and outer wall (20b), and a plate-like bottom wall (20c) that connects these inner and outer walls at one end. The inlet port (21) is located to open opposite one axial end face of a tubular filter element (10) at one end in the axial direction of the container case, while the outlet port (22) is provided at the other axial end of the container case. The deterioration suppressing agent (17) may be contained in the space enclosed by these inner wall, outer wall, and bottom wall of the container case (see, for example, FIG. 1 and others). Thereby, oil that flows into the container case from the inlet port can flow through over the entire deterioration suppressing agent and out into the oil return passage from the outlet port. Thus the oil deterioration prevention effect by the deterioration prevention unit can be further enhanced. Moreover, the filter unit and the deterioration prevention unit can be readily arranged, and the device can be made smaller.

### [EXAMPLES]

Hereinafter, the present invention will be described in more detail by way of examples with reference to the drawings. In these examples, an oil deterioration prevention device that retards deterioration of engine oil (hereinafter also referred to simply as "oil") will be shown. Tests were conducted to evaluate the deterioration prevention effects, using various mesoporous inorganic materials and others.

### 1. Deterioration prevention device

### Example 1

### (1) Oil deterioration prevention device

The oil deterioration prevention device 1 according to this Example includes a filter unit 3 and a deterioration prevention unit 4 accommodated inside a housing 2, as shown in FIG. 1. This housing 2 includes a tubular case 2a with one open axial end and a bottom, a disc-like bottom plate 2b that closes the open end of this case 2a, and an axial member 2c screwed with a hole formed in the center of this bottom plate 2b. A plurality of oil inlet passages 5 are circumferentially spaced at predetermined distances around the hole of this bottom plate 2b. These oil inlet passages 5 are connected to an oil pan 9 that reserves oil (shown as one example of "oil storage unit" according to the present invention, see FIG. 3) via a pipe or the like. A rubber check valve 16 is provided inside the housing 2 such as to cover the openings of the oil inlet passages 5.

In the center of the axial member 2c is formed an oil outlet passage 6 for allowing oil filtered in the filter unit 3 to flow to lubrication target units of the engine (for example, crankshaft, cylinder wall, valve operating mechanism, and the like). This oil outlet passage 6 is connected to the lubrication target units of the engine via a passage or the like formed inside the engine. Further, an oil return passage 7 is formed on the radially outer side of the oil outlet passage 6 of the axial member 2c to return the oil that is restrained in deterioration by the deterioration prevention unit 4 to the oil pan 9. This oil return passage 7 is connected to the oil pan 9 via a pipe or the like. Here, as shown in FIG. 2, the oil outlet passage 6 has a cross-sectional area S1 of about 113 mm², while the oil return passage 7 has a cross-sectional area S2 of about 1.13 mm². Thus, the ratio (S1/S2) of the cross-sectional areas of these passages 6 and 7 is about 100.

The filter unit 3 includes a filter element 10 for filtering oil as shown in FIG. 1. This filter element 10 is formed from a nonwoven sheet folded into a tubular shape (also referred to as "chrysanthemum shaped"). A tubular protector 11 having a large number of through holes 12 is attached on the inner circumferential side of this filter element 10. This protector 11 includes a large-diameter part 11a that supports the filter element 10 and a small-diameter part 11b that protrudes axially from one end of the large-diameter part 11a. The filter element 10 is positioned such as to divide the inner space of the housing 2 into an upstream space R1 before filtration (i.e., space where unfiltered oil exists) that connects to the oil inlet passages 5, and a downstream space R2 after filtration (i.e., space where filtered oil exists) that connects to the oil outlet passage 6.

The protector 11 is pressed toward the bottom plate 2b by a spring 14 provided between itself and the case 2a. A known relief valve 15 is provided at one axial end of the protector 11. This relief valve 15 acts to communicate the upstream and downstream spaces R1 and R2 of the filter element 10 with each other when the pressure difference between these spaces R1 and R2 in the housing 2 exceeds a preset value.

The deterioration prevention unit 4 includes a powdery deterioration suppressing agent 17 made of a mesoporous inorganic material that prevents oil from deteriorating, as shown in FIG. 1. This deterioration suppressing agent 17 is held in a plurality of (five in FIG. 1) tubular porous layers 18 made of nonwoven fabric that allows oil to pass through. In this Example, the powdery deterioration suppressing agent 17 is mixed dispersedly in the process of forming the porous layers 18.

The porous layers 18 each include a first porous layer 18a and a second porous layer 18b stacked upon one another in the direction of oil flow, as shown in FIG. 4. The first porous layer 18a which is on the upstream side has a porosity of about 0.98, while the second porous layer 18b which is on the downstream side has a porosity of about 0.92. Thus, since the first porous layer 18a has a lower density than the second porous layer 18b, the second porous layer 18b holds more deterioration suppressing agent 17 than the first porous layer 18a. Further, ring-like plates of nonwoven fabric that allow oil to pass through but not the deterioration suppressing agent 17 are arranged as intermediate layers 19 between the plurality of porous layers 18.

The porous layers 18 and intermediate layers 19 are accommodated inside the container case 20, as shown in FIG. 1. This container case 20 has concentrically arranged tubular inner wall 20a and outer wall 20b, and a ring-like plate that connects these inner and outer walls at one end as a bottom wall 20c. An inlet port 21 is formed to open opposite an axial end face of the filter element 10 at one axial end of this container case 20, and an outlet port 22 that connects to the oil return passage 7 is formed at the other axial end. The porous layers 18 and intermediate layers 19 in the stacked state are accommodated in the space enclosed by the inner wall 20a, outer wall 20b, and bottom wall 20c of this container case 20.

At one end of the inner wall 20a of the container case 20 is inserted the small-diameter part 11b of the protector 11, while at the other end is inserted the distal end of the axial member 2c. A ring-like sealing member 23 made of rubber and provided on the outer circumference at the distal end of the axial member 2c makes pressure contact with the inner wall 20a of the container case 20. Further, the container case 20 is axially sandwiched between a rubber-made, ring-like sealing member 24 arranged on the outer circumference of the small-diameter part 11b of the protector 11 and the check valve 16. The inner space 25 surrounded by the inner wall 20a of the container case 20 connects to the inner space 26 of the protector 11 and the oil outlet passage 6. The outlet port 22 of the container case 20 connects to the oil return passage 7 via a space 27 enclosed by the check valve 16, sealing member 23, inner wall 20a, and axial member 2c such as to be separated from the inner space 25 of the inner wall 20a.

### (2) Function of oil deterioration prevention device

Next, how the above-mentioned oil deterioration prevention device 1 works will be described. A pump 29 (see FIG. 3) is operated to send oil reserved in the oil pan 9 to the oil deterioration prevention device 1. As shown in FIG. 1, oil sent through the oil inlet passages 5 elastically deforms the check valve 16 and flows into the upstream space R1 in the housing 2 to reach the filter unit 3 and deterioration prevention unit 4.

Foreign substances (for example, dust, worn metal particles, sludge, and the like) in the oil that has reached the filter unit 3 are trapped by the filter element 10, after which the oil flows through the through holes 12 of the protector 11 and is sent to the lubrication target units of the engine via the downstream space R2 and oil outlet passage 6. Meanwhile, oil that has reached the deterioration prevention unit 4 flows into the container case 20 from the inlet port 21 and passes through the porous layers 18 and intermediate layers 19. Foreign substances (for example, acidic substances and the like produced in the engine) in the oil are removed by adsorption by the deterioration suppressing agent 17, after which the oil flows out from the outlet port 22 and is returned to the oil pan 9 via the space 27 and oil return passage 7. Here, since the differential pressure P2 (several hundreds kPa) in the deterioration prevention unit 4 is normally higher than the differential pressure P1 (several kPa) in the filter unit 3 (see FIG. 3), an appropriate amount of oil can be passed through the deterioration prevention unit 4, and also a high oil deterioration prevention effect is achieved.

### (3) Effects of Example

As mentioned above, with the oil deterioration prevention device 1 of this Example, oil sent from the oil pan 9 flows separately into the filter unit 3 and deterioration prevention unit 4. Oil that is filtered in the filter unit 3 is delivered to the lubrication target units of the engine without passing through the deterioration prevention unit 4. On the other hand, oil that is restrained in deterioration by the deterioration prevention unit 4 is returned to the oil pan 9 without passing through the filter unit 3. Therefore, part of oil sent from the oil pan 9 flows through a bypass passage, so that oil flow resistance is reduced and an increase in pressure loss is prevented.

In this Example, the deterioration prevention unit 4 includes porous layers 18, so that the deterioration suppressing agent 17 (mesoporous inorganic material) can be held in the porous layers 18 in an appropriately dispersed state. Therefore, the oil flow resistance can be reduced further, so that the deterioration prevention unit 4 can have an even higher effect of oil deterioration prevention.

In this Example, the porous layers 18 each include a first porous layer 18a and a second porous layer 18b, and the first porous layer 18a that is on the upstream side has a larger porosity than the second porous layer 18b that is on the downstream side. Therefore, the second porous layer 18b can hold more deterioration suppressing agent 17 than the first porous layer 18a, so that oil spreads gradually as it flows from the first porous layer 18a to the second porous layer 18b (see FIG. 4). Therefore, the oil flow resistance can be reduced further, so that the deterioration prevention unit 4 can have an even higher effect of oil deterioration prevention.

In this Example, the deterioration prevention unit 4 includes intermediate layers 19, so that the plurality of porous layers 18 are separated by the intermediate layers 19 to stop the deterioration suppressing agent 17 from moving between the porous layers 18, and therefore the deterioration suppressing agent 17 is prevented from clumping together in the downstream porous layer 18. Therefore, the oil flow resistance can be reduced further, so that the deterioration prevention unit 4 can have an even higher effect of oil deterioration prevention.

In this Example, a housing 2 that accommodates the filter unit 3 and the deterioration prevention unit 4 is provided, and the housing 2 is formed with oil inlet passages 5, an oil outlet passage 6, and an oil return passage 7. Therefore, oil sent from the oil pan 9 flows into the housing 2 through the oil inlet passages 5, while oil filtered in the filter unit 3 flows out from the oil outlet passage 6 to the lubrication target units of the engine, and oil that is restrained in deterioration by the deterioration prevention unit 4 is returned to the oil pan 9 through the oil return passage 7. Therefore, the oil deterioration prevention device 1, filter unit 3, and deterioration prevention unit 4 can be readily replaced.

In this Example, the oil outlet passage 6 has a cross-sectional area S1 that is larger than the cross-sectional area S2 of the oil return passage 7, so that a relatively large amount of oil can flow out from the oil outlet passage 6 to lubricate the lubrication target units of the engine favorably. On the other hand, a relatively small amount of oil flows through the oil return passage 7 so that the oil flow resistance can be reduced further.

In this Example, the filter unit 3 and the deterioration prevention unit 4 are arranged such as to divide the inner space of the housing 2 into an upstream space R1 that connects to the oil inlet passages 5 and a downstream space R2 that connects to the oil outlet passage 6. The deterioration prevention unit 4 includes a container case 20 that contains the deterioration suppressing agent 17, and this container case 20 is formed with an inlet port 21 that opens to the upstream space R1, and an outlet port 22 that connects to the oil return passage 7 such as to be separated from the upstream space R1 and downstream space R2. Therefore, oil sent from the oil pan 9 flows into the upstream space R1 inside the housing 2 through the oil inlet passages 5, while oil filtered in the filter unit 3 flows out through the downstream space R2 and oil outlet passage 6 to the lubrication target units of the engine. Meanwhile, oil that flows into the container case 20 from the inlet port 21 flows through the deterioration suppressing agent 17 to prevent deterioration before being returned to the oil pan 9 via the outlet port 22 and oil return passage 7.

In this Example, the filter unit 3 and the deterioration prevention unit 4 that are tubular are disposed along the axial direction inside the housing 2. The container case 20 has tubular inner wall 20a and outer wall 20b, and a plate-like bottom wall 20c that connects these inner wall 20a and outer wall 20b at one end. Further, the inlet port 21 is located to open opposite one axial end face of a tubular filter element 10 at one end in the axial direction of the container case 20, while the outlet port 22 is provided at the other axial end of the container case 20. The deterioration suppressing agent 17 is contained in the space enclosed by the inner wall 20a, outer wall 20b, and bottom wall 20c of this container case 20. Therefore, oil that flows into the container case 20 from the inlet port 21 flows through the entire deterioration suppressing agent 17 and out into the oil return passage 7 from the outlet port 22. Thus the oil deterioration prevention effect by the deterioration prevention unit 4 can be further enhanced. Moreover, the filter unit 3 and the deterioration prevention unit 4 can be readily arranged, and the device can be made smaller.

### Example 2

Next, a structure of an oil deterioration prevention device according to Example 2 will be described. The constituent elements of the oil deterioration prevention device according to Example 2 that are substantially the same as those of the oil deterioration prevention device 1 according to Example 1 are given the same reference numerals and will not be described in detail again.

### (1) Oil deterioration prevention device

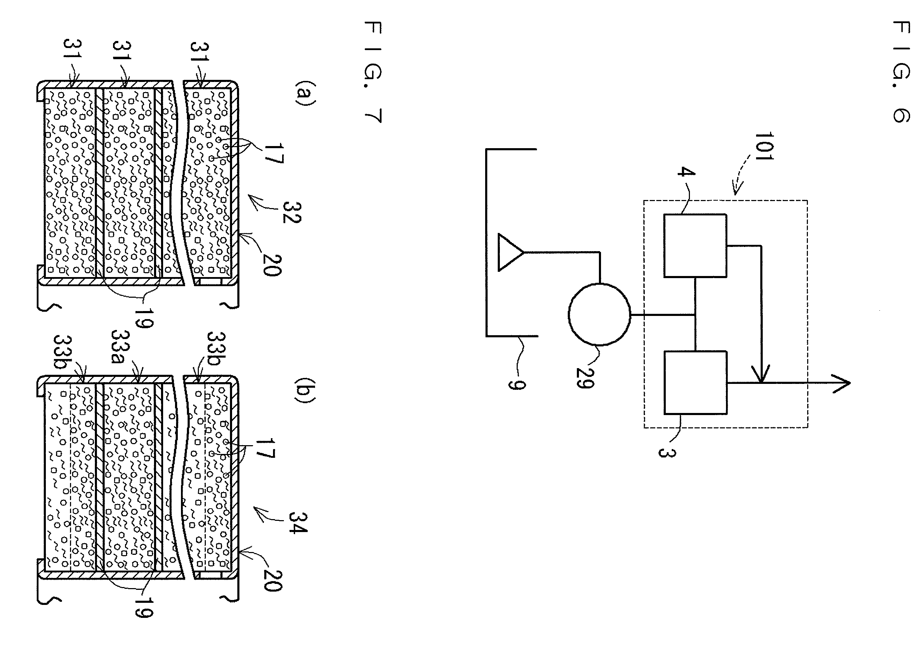

The oil deterioration prevention device 101 according to this Example includes a filter unit 103 and a deterioration prevention unit 104 accommodated inside a housing 102, as shown in FIG. 5. This housing 102 includes a tubular case with one open axial end and a bottom, a disc-like bottom plate 102b that closes the open end of this case, and an axial member 102c screwed with a hole formed in the center of this bottom plate 102b. A plurality of oil inlet passages 105 is circumferentially spaced at predetermined distances around the hole of this bottom plate 102b. These oil inlet passages 105 are each connected to an oil pan 9 that reserves oil (shown as one example of "oil storage unit" according to the present invention, see FIG. 6) via a pipe or the like. A rubber check valve 16 is provided inside the housing 102 such as to cover the openings of the oil inlet passages 105.

In the center of the axial member 102c is formed an oil outlet passage 106 for allowing oil filtered in the filter unit 103 to flow to lubrication target units of the engine (for example, crankshaft, cylinder wall, valve operating mechanism, and the like). This oil outlet passage 106 is connected to the lubrication target units of the engine via a passage or the like formed inside the engine. Further, a communication passage that connects to the oil outlet passage 106 is formed on the radially outer side of the axial member 102c.

The filter unit 103 includes a filter element 10 for filtering oil. A tubular protector 111 is attached on the inner circumferential side of this filter element 10. This protector 111 includes a large-diameter part 111a that supports the filter element 10 and a small-diameter part 111b that protrudes axially from one end of the large-diameter part 111a. The wall forming this large-diameter part 111a has a large number of through holes 112. One end of the small-diameter part 111b is fixed to the outer circumferential surface of the axial member 102c. The filter element 10 is positioned such as to divide the inner space of the housing 102 into an upstream space R1 before filtration (i.e., space where unfiltered oil exists) that connects to the oil inlet passages 105, and a downstream space R2 after filtration (i.e., space where filtered oil exists) that connects to the oil outlet passage 106. The protector 111 is pressed toward the bottom plate 102b by a spring 14 provided between itself and the case. A known relief valve 15 is provided at one axial end of the protector 111.

The deterioration prevention unit 104 includes a powdery deterioration suppressing agent 17 made of a mesoporous inorganic material that prevents oil from deteriorating. This deterioration suppressing agent 17 is held in a plurality of (three in FIG. 5) tubular porous layers 118 made of nonwoven fabric that allows oil to pass through. The plurality of porous layers 118 are arranged concentrically around the axial center of the housing 102. In this Example, the powdery deterioration suppressing agent 17 is mixed dispersedly in the process of forming the porous layers 118.

The porous layers 118 each include a first porous layer 118a and a second porous layer 118b stacked upon one another in the direction of oil flow. Here, the first porous layer 118a which is on the upstream side has a porosity of about 0.98, and the second porous layer 118b which is on the downstream side has a porosity of about 0.92. Thus, since the first porous layer 118a has a lower density than the second porous layer 118b, the second porous layer 118b holds more deterioration suppressing agent 17 than the first porous layer 118a. Further, ring-like plates of nonwoven fabric that allow oil to pass through but not the deterioration suppressing agent 17 are arranged as intermediate layers 119 between the plurality of porous layers 118.

The porous layers 118 and intermediate layers 119 are accommodated inside the container 120. This container 120 includes the small-diameter part 111b of the protector 111, and upper and lower annular plates 120a arranged on the outer circumference of this small-diameter part 111b. An inlet port 121 that opens to the upstream space R1 is formed on the outer circumferential side of the container 120. An outlet port 122 that opens to the downstream space R2 is formed in the small-diameter part 111b.

### (2) Function of oil deterioration prevention device

Next, how the above-mentioned oil deterioration prevention device 101 works will be described. A pump 29 (see FIG. 6) is operated to send oil reserved in the oil pan 9 to the oil deterioration prevention device 101. As shown in FIG. 5, oil sent through the oil inlet passages 105 elastically deforms the check valve 16 and flows into the upstream space R1 in the housing 102 to reach the filter unit 103 and deterioration prevention unit 104.

Foreign substances (for example, dust, worn metal particles, sludge, and the like) in the oil that has reached the filter unit 103 are trapped by the filter element 10, after which the oil flows through the through holes 112 of the protector 111 and is sent to the lubrication target units of the engine via the downstream space R2 and oil outlet passage 106. On the other hand, oil that has reached the deterioration prevention unit 104 flows into the container 120 from the inlet port 121 and passes through the porous layers 118 and intermediate layers 119, so that foreign substances (such as, for example, acidic substances and the like produced in the engine) in the oil are removed by adsorption by the deterioration suppressing agent 17, after which the oil flows out from the outlet port 122 and is sent to the lubrication target units of the engine via the downstream space R2 and oil return passage 106.

### (3) Effects of Example

As mentioned above, with the oil deterioration prevention device 101 of this Example, substantially the same advantageous effects as those of the oil deterioration prevention device 1 of Example 1 are achieved. In addition, oil sent from the oil pan 9 flows separately through each of the filter unit 103 and deterioration prevention unit 104, and oil filtered in the filter unit 103 is delivered to the lubrication target units of the engine without flowing through the deterioration prevention unit 104. On the other hand, the oil that is restrained in deterioration by the deterioration prevention unit 104 is delivered to the lubrication target units of the engine without flowing through the filter unit 103. Therefore, part of oil sent from the oil pan flows through a bypass passage, so that oil flow resistance is reduced and an increase in pressure loss is prevented.

In this Example, a housing 102 that accommodates the filter unit 103 and the deterioration prevention unit 104 is provided, and the housing 102 is formed with oil inlet passages 105 and an oil outlet passage 106. Therefore, oil sent from the oil pan 9 flows into the housing 102 through the oil inlet passages 105, while oil filtered in the filter unit 103 flows out from the oil outlet passage 106 to the lubrication target units, and the oil that is restrained in deterioration by the deterioration prevention unit 104 is sent out to the lubrication target units through the oil outlet passage 106.

In this Example, the filter unit 103 and the deterioration prevention unit 104 are arranged such as to divide the inner space of the housing 102 into an upstream space R1 that connects to the oil inlet passages 105 and a downstream space R2 that connects to the oil outlet passage 106. The deterioration prevention unit 104 includes a container 120 that contains the deterioration suppressing agent 17, and this container 120 is formed with an inlet port 121 that opens to the upstream space R1, and an outlet port 122 that opens to the downstream space R2. Oil sent from the oil pan 9 flows into the upstream space R1 inside the housing 102 through the oil inlet passages 105, while oil filtered in the filter unit 103 flows out through the downstream space R2 and oil outlet passage 106 to the lubrication target units. Meanwhile, oil that flows into the container 120 from the inlet port 121 flows through the deterioration suppressing agent 17 to prevent deterioration before flowing out to the lubrication target units via the outlet port 122, downstream space R2, and oil outlet passage 106.

The present invention is not limited to the Examples 1 and 2 described above and may be changed variously in accordance with the purposes and applications within the scope of the present invention. Namely, while the deterioration prevention units 4, 104 illustrated in the Examples 1 and 2 have a plurality of multi porous layers 18, 118 each having first and second porous layers 18a, 18b, 118a, and 118b, the invention is not limited to this, and as shown in FIG. 7A, for example, the deterioration prevention unit 32 may be configured with a plurality of porous layers 31 each of which is a single layer. Also, as shown in FIG. 7B, the deterioration prevention unit 34 may be configured with a combination of a single porous layer 33a and multi porous layers 33b.

While one embodiment of porous layer 18, 118 illustrated in the Examples 1 and 2 described above has two, first and second, porous layers 18a, 18b, 118a, and 118b, the invention is not limited to this, and the porous layer may have, for example, three or more layers having different porosities. Also, while the deterioration prevention unit 4, 104 illustrated in the Examples 1 and 2 described above has intermediate layers 19, 119 arranged between the plurality of porous layers 18, 118, the invention is not limited to this, and, for example, the deterioration prevention unit may be configured with a plurality of adjacent porous layers 18, 118 directly stacked upon one another, without any intermediate layer 19 arranged therebetween. Further, while the deterioration prevention unit 4 illustrated in the Examples 1 and 2 described above has a container case 20 or container 120 accommodating the porous layers 18, 118 therein, the invention is not limited to this, and, for example, the porous layers 18, 118 may be arranged in the housing 2 without providing the container case 20 or container 120.

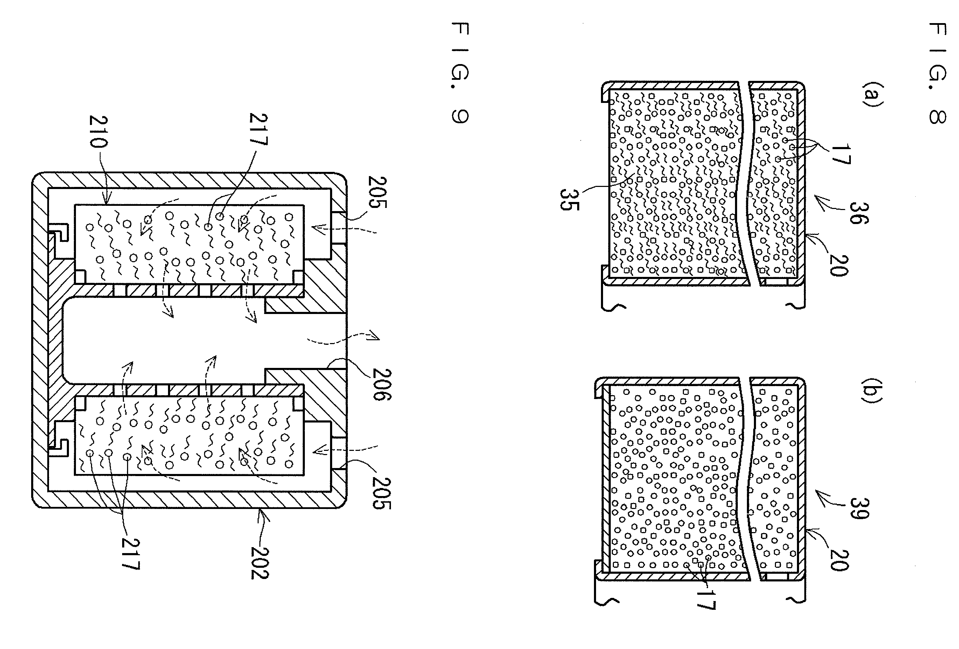

While the deterioration prevention unit 4, 104 illustrated in the Examples 1 and 2 described above has a plurality of porous layers 18, 118, the invention is not limited to this, and as shown in FIG. 8A, for example, the deterioration prevention unit 36 may be configured with a single porous layer 35. Also, while the deterioration prevention unit 4, 104 illustrated in the Examples 1 and 2 described above has porous layers 18, 118 holding a powdery deterioration suppressing agent 17, the invention is not limited to this, and as shown in FIG. 8B, for example, the deterioration prevention unit 39 may not have porous layers 18, 118 and be configured with a deterioration suppressing agent 17 sealed in the container case 20 (or container 120).

While one embodiment of oil deterioration prevention device 1, 101 was illustrated in the Examples 1 and 2 above wherein the entire device including the housing 2, 102 is replaced (so-called spin-on design), the invention is not limited to this, and, for example, the oil deterioration prevention device may have a housing 2, 102 that is disassemblable, so that the filter unit 3, 103 and/or deterioration prevention unit 4, 104 can be directly replaced.

While one embodiment was illustrated in the Examples 1 and 2 above wherein the filter unit 3, 103 and deterioration prevention unit 4, 104 are accommodated in a single housing 2, 102, the invention is not limited to this, and, for example, the device may have a filter unit 3, 103 accommodated in a first housing, and a deterioration prevention unit 4, 104 accommodated in a second housing that is different from the first housing.

Further, while an oil deterioration prevention device 1, 101 illustrated in the Examples 1 and 2 above is used in a wet sump engine, the invention is not limited to this, and, for example, the oil deterioration prevention device may be used in a dry sump engine, or in an automatic transmission.

### 2. Evaluation of deterioration suppressing agent

### Test Example 1 [Evaluation of deterioration prevention effect (deterioration product trapping effect) of various deterioration suppressing agents used as a filter medium]

One technique of removing deterioration products in the oil deterioration prevention technology was investigated, wherein initial deterioration products are trapped before they polymerize and form a sludge, so as to prevent oil from deteriorating. A plurality of mesoporous inorganic materials having mesopores with a predetermined average pore diameter was used as the deterioration suppressing agent (filter medium). To compare the deterioration product trapping effect, sepiolite that does not have a peak value in the pore diameter distribution, acidic white clay that does not have a peak value in the pore diameter distribution, and diatom earth with too large an average pore diameter, zeolite with too small an average pore diameter, and non-porous silica were used in the tests.

### (1) Filter medium used in tests

Various filter medium listed in Tables 1 and 2 were used. The details of respective filter medium are as specified in Tables 1 and 2. Five filter medium (from (e) to (i) below) listed in Table 2 are for comparative test examples.
(a) Amorphous mesoporous silica (FSM) (trade name "TMPS-4" manufactured by Taiyo Kagaku Co., Ltd.);
(b) Activated white clay (trade name "Musashilite V" manufactured by Musashiyuka Kabushiki Kaisha,);
(c) Silica gel (trade name "C-500HG" manufactured by Wako Pure Chemical Industries, Ltd.);
(d) Activated alumina (trade name "VGL15" manufactured by Union Showa K.K.);
(e) Sepiolite (trade name "P-80V" manufactured by Ohmi Chemical Industry Co., Ltd.);
(f) Acidic white clay (trade name "Nikkanite S-200" manufactured by Nippon Kasseihakudo Kabushiki Kaisha);
(g) Diatom earth (trade name "Radiolite Special Flow" manufactured by Showa Chemical Industry Co., Ltd.);
(h) Zeolite (trade name "Zeolum A-3" manufactured by Tosoh Corporation);
   and
(i) Non-porous silica (trade name "SO-E2" manufactured by Admatechs Company Limited).

**Table 1**

| Filter medium | FSM | Activated white clay | Silica gel | Activated alumina |
|---|---|---|---|---|
| Average pore diameter (nm) | 2.7 | 3.0 | 7.0 | 22.0 |
| Pore volume (cm³/g) | 0.78 | 0.41 | 0.74 | 0.68 |
| Specific surface area (m²/g) | 900 | 426 | 450 | 140 |

**Table 2**

| Filter medium | Sepiolite | Acidic white clay | Diatom earth | Zeolite | Non-porous silica |
|---|---|---|---|---|---|
| Average pore diameter (nm) | No peak (1∼20) | No peak (2∼40) | 300 | 0.3 | - |
| Pore volume (cm³/g)* | 0.25 | 0.13 | - | - | - |
| Specific surface area (m²/g) | 225 | 61 | - | - | - |

### (2) Test

Filtering tests were conducted, with the mesoporous inorganic materials used as the filter medium and the filter medium of the comparative test examples, using NOx-deteriorated oil. More specifically, components of filtered oil were examined by Fourier transform infrared spectroscopic analysis (FT-IR) to determine the trapping effect on nitric ester, which is a component produced in the initial stage of deterioration.

### (3) NOx-deteriorated oil specimen

NOx-deteriorated oil, which simulates an oil that was used in the gasoline engine for a long period of time, was prepared by bubbling NO₂ gas in a genuine Toyota oil (trade name "Toyota Castle SM 5W-30"), which is a commercially available engine oil, and was used in the test. The bubbling conditions are as shown in Table 3.

**Table 3**

| | |
|---|---|
| Oil type | Genuine Toyota oil SM 5W-30 |
| Amount of oil | 300 mL |
| NO₂ concentration | 1,000 ppm |
| Air flow rate | 205 mL/min (165 mL/min for humidification) |
| Nitrogen gas flow rate | 50 mL/min |
| Flow rate of nitrogen gas containing 1 wt% NO₂ | 28 mL/min |
| Total gas flow rate | 283 mL/min |
| Oil temperature | 130 °C |
| Bubbling time | 40 h |

In Table 3, of the total gas flow rate of 283 mL/min, 28 mL/min, which is a difference between the air flow rate of 205 mL/min and the nitrogen gas flow rate of 50 mL/min, was supplied as a nitrogen gas containing 1% by mass of NO₂ from a gas cylinder.

### (4) Filtering method

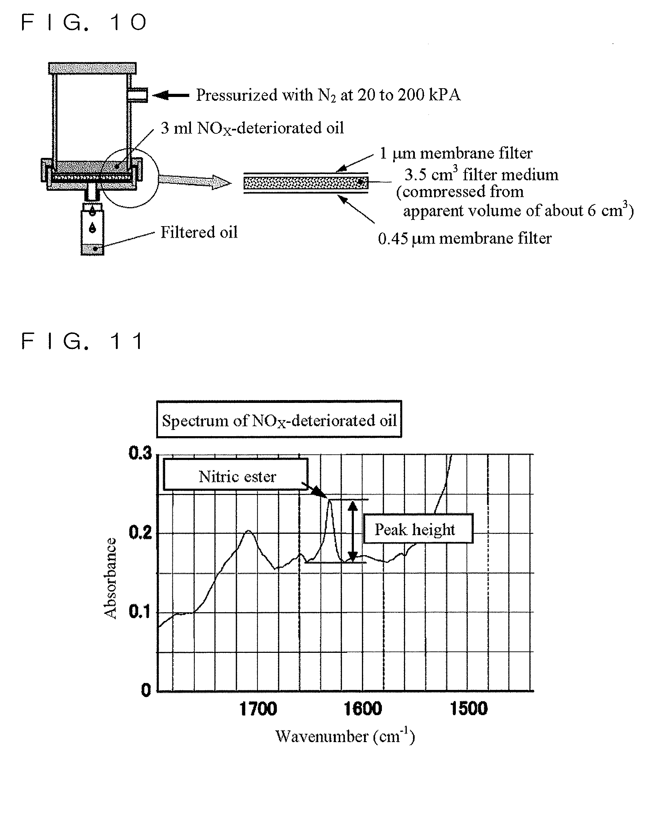

NOx-deteriorated oil was filtered using a device shown in FIG. 10. The filter medium in particulate form having an apparent volume of about 6 cm³ was dispersed on a membrane filter "POREFLON FP045" (trade name, pore size: 0.45 µm) manufactured by Sumitomo Electric Industries, Ltd. and was compressed with a hydroforming machine under a pressure of 4 MPa. After that, a membrane filter "POREFLON FP100" (trade name, pore size: 1 µm) manufactured by Sumitomo Electric Industries, Ltd. was placed on the formed filter medium. The stacked assembly was mounted in the filtering device, and 3 mL NOx-deteriorated oil was poured in. Next, the pressure was raised stepwise to 20, 50, 100, 150, and 200 kPa with N₂ gas, to pressurize the stacked assembly for two hours each at respective pressure levels.

### (5) Evaluation method of deterioration product trapping effect

### (5-1) Analysis of oil components

NOx-deteriorated oil specimen and oil after filtration were both analyzed by FT-IR. The device used and analysis conditions are as follows:
Fourier transform infrared spectroscopic analysis device "Avatar 360" (model name) manufactured by Thermo Nicolet Japan Corporation,
Cell used: Cell for holding liquids manufactured by JASCO Corporation, KBr, t = 0.1 mm
Number of accumulation: 32 times

### (5-2) Initial deterioration product trapping rate

Focus was placed on nitric ester (wave number: 1,630 cm⁻¹), which is one component of initial deterioration products and measured the peak height of nitric ester in the NO_{X}-deteriorated oil before and after filtration, to determine the rate of trapping initial deterioration products from the diminution rate. FIG. 11 shows one example of IR spectrum of nitric ester in the NO_{X}-deteriorated oil specimen.

### (6) Evaluation results of deterioration product trapping effect

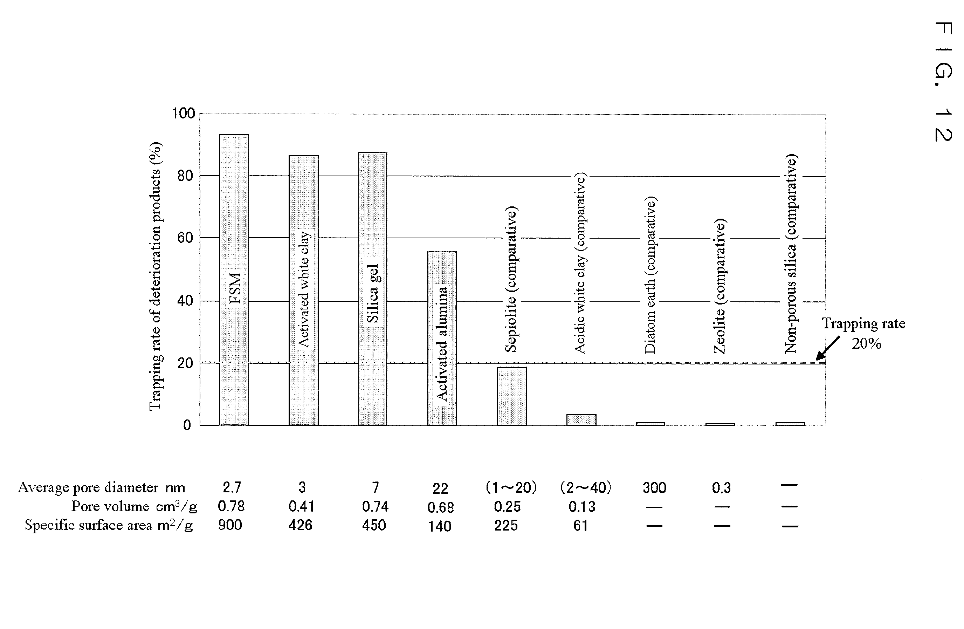

FIG. 12 shows the results of evaluation. According to FIG. 12, all the comparative test examples, i.e., sepiolite that does not have a peak value in the pore diameter distribution, acidic white clay that does not have a peak value in the pore diameter distribution, diatom earth with too large an average pore diameter of 300 nm, zeolite with too small an average pore diameter of 0.3 nm, and non-porous silica, exhibited an initial deterioration product trapping rate of less than 20%, which indicates they had a poor trapping effect. On the other hand, the mesoporous inorganic materials, i.e., FSM, activated white clay, silica gel, and activated alumina, exhibited an initial deterioration product trapping rate of more than 50%, which indicates they had an excellent trapping effect. In particular, FSM, activated white clay, and silica gel with a small average pore diameter of 2.7 to 7 nm and a specific surface area of 426 to 900 m²/g showed an initial deterioration product trapping rate of more than 80%, which indicates they had an even higher trapping effect.

### Test Example 2 (Evaluation of deterioration prevention effect using oil deterioration test device)

Using activated white clay that exhibited an excellent trapping effect with a trapping rate of more than 80% in the filtering test of Test Example 1, its deterioration prevention effect was evaluated by a real-time test with conditions closer to oil deterioration conditions in an actual engine.

### (1) Test method

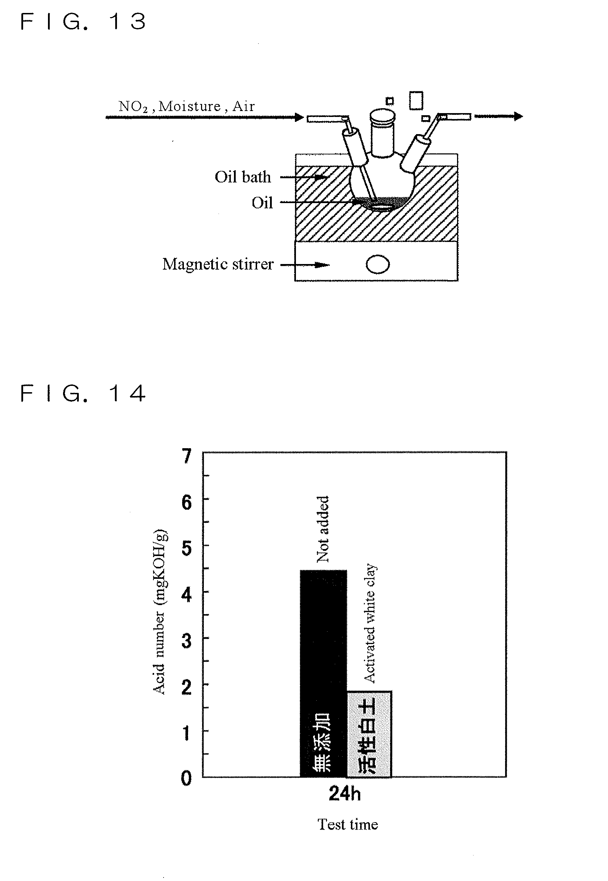

A NO_{X}-deterioration test device shown in FIG. 13 was used in the real-time test. More specifically, an oil specimen, a genuine Toyota oil "Toyota Castle SM 5W-30" (trade name, having, when new, an acid number of 2.5 mgKOH/g) which is a commercially available gasoline engine oil, containing 3% by mass of activated white clay dispersed therein, was introduced into a glass test container, i.e., a three neck flask, from the center neck thereof, with a lower part of the container being immersed in oil bath of a temperature adjusted to a predetermined level, and NO₂-induced deterioration test was conducted for 24 hours under the test conditions specified in Table 4. Air containing NO₂ and moisture was passed to flow into the oil specimen from an inlet on the left side in FIG. 13 and flow out from an outlet on the right side.

**Table 4**

| | |
|---|---|
| Oil specimen | 40 g [SM 5W-30 + activated white clay (3% by mass)] |
| NO₂ concentration | 1,000 ppm |
| Air flow rate | 205 mL/min (165 mL/min for humidification) |
| Nitrogen gas flow rate | 50 mL/min |
| Flow rate of nitrogen gas containing 1 wt% NO₂ | 28 mL/min |
| Total gas flow rate | 283 mL/min |
| Oil temperature | 1 cycle of 4 h at 40°C → 4 h at 90°C |
| Test time | 24 h (8 h x 3 cycles) |

In Table 4, of the total gas flow rate of 283 mL/min, 28 mL/min, which is a difference between the air flow rate of 205 mL/min and the nitrogen gas flow rate of 50 mL/min, was supplied as a nitrogen gas containing 1% by mass of NO₂ from a gas cylinder.

### (2) Test results

The test results were evaluated based on the changes in the acid number of oil after the test. FIG. 14 shows the results of evaluation. According to FIG. 14, the oil that contained activated white clay had an acid number of less than 50% of the acid number of oil without activated white clay. This indicates that activated white clay sufficiently suppressed an increase in acid number that occurs during the NO_{X}-induced deterioration test, meaning that it suppressed an increase in acidic substances in the oil.

### Test Example 3 (Evaluation of oil deterioration prevention effect using actual engine)

### (1) Oil deterioration prevention device

An oil deterioration prevention device having a bypass flow structure shown in FIG. 1 was fabricated. As the deterioration suppressing agent, FSM that exhibited an excellent trapping effect with a trapping rate of more than 90% in the filtering test of Test Example 1 was used, 10 g of which was held in the deterioration prevention unit. Using this oil deterioration prevention device in an actual engine, an evaluation test for oil deterioration prevention effect was conducted.

### (2) Test method

The test was conducted with an engine running under conditions shown in Table 5 for two cases: one with an oil deterioration prevention device having a deterioration prevention unit holding the FSM mentioned in (1) above for circulating the oil taken out from the engine oil pan with a pump, and the other without such a device. Evaluation was made based on the measurements of the amount of initial deterioration products produced during the operation of the engine and mixed into the oil, and the base number and acid number of the oil.

**Table 5**

| | |
|---|---|
| Engine | 1.8 L gasoline engine |
| Drive pattern | 800 rpm (low load) to 4,000 rpm (full load) |
| Oil type | Genuine Toyota oil SL 5W-30 |
| Oil temperature | 30∼125 °C |
| Amount of oil | 4,000 mL |
| Test time | 200 h (150 cycles) |

### (3) Test results

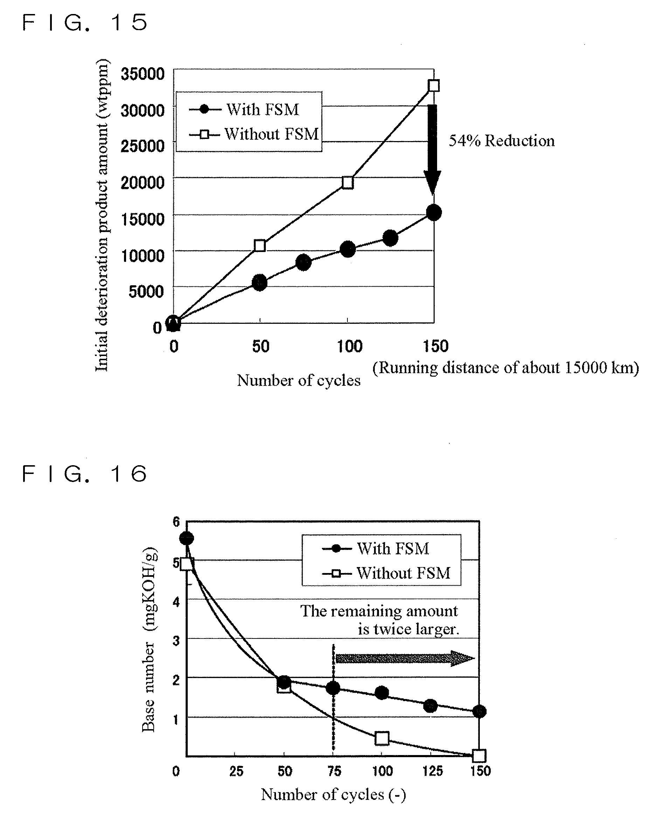

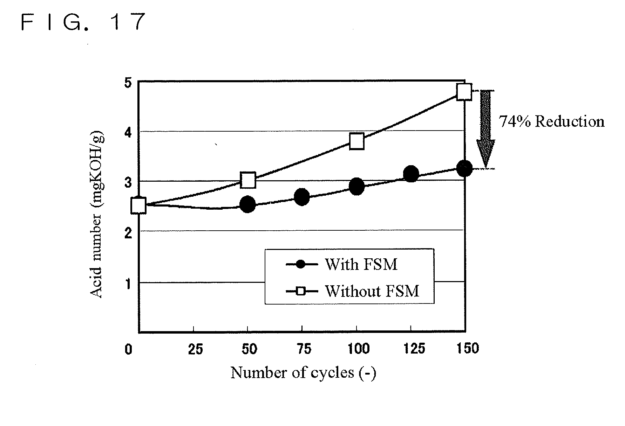

FIG. 15 shows the amount of initial deterioration products that were in the oil sampled during the test and measured using a centrifuge. FIG. 15 indicates that the amount of initial deterioration products at 150 cycles (corresponding to a driving distance of about 15000 km) can be reduced by 54% if the oil is filtered with the oil deterioration prevention device, as compared to when the device is not used. FIG. 16 shows the base number measured by a hydrochloric acid method in accordance with JIS K2501 "Petroleum products and lubricants; testing method for neutralization number." FIG. 16 indicates that it takes about twice longer for the base number of oil, which is one of the indices of the degree of oil deterioration, to reduce to 1 mgKOH/g, if the oil is filtered by the oil deterioration prevention device, as compared to when the device is not used. Further, according to FIG. 17 that shows the increase in acid number, the acid number of oil at 150 cycles is lower by 74% as compared to when the device is not used, meaning that the device can suppress an increase in the acidic substances.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the embodiments described in detail above, and can be modified or changed in various manners within the scope as set forth in the claims of the present invention.

### [INDUSTRIAL APPLICABILITY]

The invention is widely applicable as a technique to prevent oil from deteriorating. The inventions is used favorably as a technique to prevent deterioration of engine oil of vehicles, in particular, such as cars, buses, and trucks, as well as railroad vehicles such as trains and railroad cars, construction vehicles, agricultural vehicles, industrial vehicles, and the like.

### [EXPLANATIONS OF NUMERALS]

- 1, 101:: Oil deterioration prevention device
- 2, 102:: Housing
- 3, 103:: Filter unit
- 4, 104, 32, 34, 36, 39:: Deterioration prevention unit
- 5, 105:: Oil inlet passage
- 6, 106:: Oil outlet passage
- 7:: Oil return passage
- 9:: Oil pan
- 10:: Filter element
- 17:: Deterioration suppressing agent
- 18, 118, 31, 33a, 33b, 35:: Porous layer
- 18a, 118a:: First porous layer
- 18b, 118b:: Second porous layer
- 19, 119:: Intermediate layer

## Claims

1. An oil deterioration prevention device, **characterized by** comprising a filter unit having a filter element for filtering an oil, and a deterioration prevention unit having a powdery deterioration suppressing agent that prevents an oil from deteriorating,
wherein said deterioration suppressing agent comprises a mesoporous inorganic material, and
wherein part of oil sent from an oil storage unit is delivered to a lubrication target unit after being filtered in said filter unit, and an oil that is restrained in deterioration by said deterioration prevention unit is either returned to said oil storage unit or delivered to said lubrication target unit.

2. The oil deterioration prevention device according to claim 1,
wherein an average pore diameter of said mesoporous inorganic material is in a range from 1 to 30 nm.

3. The oil deterioration prevention device according to claim 1,
wherein a pore volume of said mesoporous inorganic material is in a range from 0.3 to 4.0 cm³/g.

4. The oil deterioration prevention device according to claim 1,
wherein a specific surface area of said mesoporous inorganic material is in a range from 120 to 2,000 m²/g.

5. The oil deterioration prevention device according to any one of claims 1 to 4,
wherein said mesoporous inorganic material is an oxide-based inorganic material including an element selected from the group consisting of Si, Al, Fe, Ca, and Mg.

6. The oil deterioration prevention device according to any one of claims 1 to 5,
wherein said deterioration prevention unit comprises a porous layer that holds said deterioration suppressing agent and allows oil to pass through.

7. The oil deterioration prevention device according to claim 6,
wherein said porous layer has a first porous layer and a second porous layer stacked upon one another in a direction in which oil flows, said first porous layer on an upstream side having a larger porosity than said second porous layer on a downstream side.

8. The oil deterioration prevention device according to claim 6 or 7,
wherein said deterioration prevention unit comprises an intermediate layer that is disposed between a plurality of said porous layers, said intermediate layer not allowing said deterioration suppressing agent to pass through but allowing oil to pass through.

9. The oil deterioration prevention device according to any one of claims 1 to 8, further comprising a housing that accommodates said filter unit and said deterioration prevention unit,
wherein said housing is formed with an oil inlet passage for allowing oil sent from said oil storage unit to flow into said housing, an oil outlet passage for allowing oil filtered in said filter unit to flow out to said lubrication target unit, and an oil return passage for returning said oil that is restrained in deterioration by said deterioration prevention unit to said oil storage unit.
